# EUROPÄISCHE PATENTSCHRIFT

(11) **EP 3 699 732 B1**
(45) Veröffentlichungstag und Bekanntmachung des Hinweises auf die Patenterteilung: **12.04.2023**
(21) Anmeldenummer: 20153849.3
(22) Anmeldetag: 27.01.2020
(51) Int. Cl.: G06F 3/01, G06F 1/16, H04M 1/02

(54) **TRAGBARES ENDGERÄT**
PORTABLE TERMINAL
TERMINAL PORTABLE

(30) Priorität: 22.02.2019 DE 102019202462
(43) Veröffentlichungstag der Anmeldung: 26.08.2020
(73) Patentinhaber: Volkswagen Aktiengesellschaft, 38440 Wolfsburg (DE)
(72) Erfinder: Hirsch, Michael, 31226 Peine (DE); Rowold, Karsten, 38162 Cremlingen (DE)
(74) Vertreter: Patentanwälte Vomberg & Schart

(56) Entgegenhaltungen:
- US-A1- 2004 120 039
- US-A1- 2016 187 923
- US-A1- 2017 329 402
- US-A1- 2018 203 179
- US-B1- 6 481 851

## Beschreibung

Die vorliegende Erfindung betrifft ein tragbares Endgerät mit einer Darstellungseinheit, einer Bedieneinheit und einem zusammenklappbaren Gehäuse, wobei die Darstellungseinheit eingerichtet ist, um innerhalb eines Interaktionsraums ein virtuelles zweidimensionales oder dreidimensionales Abbild zu erzeugen, so dass die Darstellung des virtuellen Abbilds räumlich mit dem Interaktionsraum zusammenfällt, und die Bedieneinheit eine Interaktion mit dem im Interaktionsraum stehenden Abbild erlaubt, wozu die Bedieneinheit einen ersten Sensor aufweist, der zur Objekterkennung eingerichtet ist und eine Interaktion mit dem Abbild innerhalb des Interaktionsraums erlaubt, wobei die Darstellungseinheit Teil eines ersten Gehäuseteils ist und die optische Komponente Teil eines zweiten Gehäuseteils ist, wobei das erste und das zweite Gehäuseteil zueinander verschwenkbar gelagert sind.

Die aus dem Stand der Technik bekannten tragbaren Endgeräte sind überwiegend als Smartphones, Tablets oder Notebooks ausgestaltet. Als Darstellungseinheit besitzen solche Endgeräte einen Display, auf dem Bilder, Videos, Videospiele und sonstige Informationen zweidimensional abgebildet werden. Zur Bedienung der Endgeräte sind externe Eingabegeräte, wie beispielsweise Tastaturen, Mäuse oder Joysticks vorgesehen. Auch eine unmittelbare Interaktion mit dem Display ist über sogenannte Touchscreens möglich, bei denen der Anwender durch unmittelbares Berühren des Displays Eingaben vornehmen kann. Nachteiligerweise sind bekannte tragbare Endgeräte auf die zweidimensionale Wiedergabe der Bilder, Videos, Videospiele und sonstigen Informationen aufgrund der displaygebundenen Darstellung eingeschränkt, was die Anwendungsmöglichkeiten solcher Endgeräte beschränkt.

Ein in wesentlichen gattungsgemäßes Endgerät ist in US 2018/0203179 A1 offenbart, allerdings weist die hierin beschriebene Vorrichtung kein falt- oder tragbares Gehäuse auf.

Weiter Endgeräte mit einer Darstellungseinheit zur Erzeugung eines virtuellen Abbilds werden in US 2004/120039 A1, US 2016/187923 A1, US 6481851 B1 und US 2017/329402 A1 beschrieben.

Hiervon ausgehend ist es die Aufgabe der vorliegenden Erfindung, ein tragbares und mithin mobiles oder portables Endgerät vorzuschlagen, das einerseits die Vorteile mobiler Smartphones, Tablets oder Notebooks insbesondere in Bezug auf die mobile Nutzbarkeit und die platzsparende Transportierbarkeit aufweist, und andererseits die Anwendungsmöglichkeiten insbesondere bei der Darstellung von Bildern, Videos, Videospielen und sonstigen Informationen verbessert.

Diese Aufgabe wird durch das tragbare Endgeräte nach Anspruch 1 gelöst. Erfindungsgemäß ist ein drittes Gehäuseteil vorgesehen, das derart schwenkbar mit dem zweiten Gehäuseteil verbunden ist, dass es im zusammengeklappten Zustand das zweite Gehäuseteil und die optische Komponente als Schutzabdeckung abdeckt und im aufgeklappten Zustand derart mit dem ersten Gehäuseteil lösbar verbunden ist, dass sich zwischen dem ersten Gehäuseteil, dem zweiten Gehäuseteil und dem dritten Gehäuseteil ein Raum mit einem dreieckförmigen Querschnitt und dreieckförmigen Stirnflächen ergibt.

Durch die Darstellungseinheit wird ein virtuelles Abbild erzeugt, das der Anwender als zweidimensionales oder dreidimensionales (ggf. bewegtes) Objekt innerhalb des Interaktionsraums wahrnimmt. Dadurch, dass das tragbare Endgerät ein zusammenklappbares Gehäuse besitzt, ist das Endgerät mobil und nicht auf eine ortsgebundene oder stationäre Anwendung beschränkt. Insgesamt erweitern sich daher die Anwendungsmöglichkeiten tragbarer Endgeräte.

Sofern als Bedienelement eine Hand oder ein Finger des Anwenders definiert wird, erkennt, registriert und verfolgt der erste Sensor die Bewegung des definierten Bedienelementes und durch eine Kopplung mit einer geeigneten Auswerteeinheit ist bestimmbar, ob und wie eine Interaktion mit dem virtuellen Abbild durchgeführt wurde. Hierdurch lassen sich etwaige Steuerbefehle eindeutig zuordnen und weiterverarbeiten. Alternativ kann als Bedieneinheit auch eine mit dem tragbaren Endgerät verbindbare oder hierin integrierte Tastatur oder 3D-Maus eingesetzt werden, was eine mittelbare Interaktion mit dem virtuellen Abbild erlaubt.

Bevorzugte Ausgestaltungen der vorliegenden Erfindung werden nachfolgend und in den Unteransprüchen angegeben.

Die Darstellungseinheit ist vorzugsweise mit einem geeignet eingerichteten zweiten Sensor verbunden, der eine Positionsbestimmung und/oder Bewegungsbestimmung des Kopfes eines Anwenders erlaubt, so dass das stehende Abbild an die Position und/oder die Bewegung des Kopfes automatisch anpassbar ist.

Um die Bedienung des tragbaren Endgerätes zu vereinfachen, ist nach einer bevorzugten Ausgestaltung der Erfindung eine Vorrichtung zur Erzeugung eines haptischen Feedbacks während der Interaktion mit dem virtuellen Abbild vorgesehen. Ein derartiges haptisches Feedback kann beispielsweise durch Ultraschalllautsprecher erzeugt werden, die an dem tragbaren Endgerät oder in der unmittelbaren Umgebung angeordnet sind, die durch Überlagerung von Ultraschallschwingungen an vorgebbaren Positionen im Interaktionsraum einen fühl- oder tastbaren Luftdruckpuls erzeugen. Alternativ können Lichtsignale und/oder Temperatureffekte als Rückkopplung bei der Bedienung eingesetzt werden, um anzuzeigen, dass das virtuelle Abbild durch eine Kollision mit dem definierten Bedienelement bedient wurde, wodurch sich ein hohes Immersionsgefühl in Bezug auf das im Interaktionsraum stehende Abbild ergibt.

Damit eine autarke Nutzung des Endgerätes möglich ist, besitzt das Endgerät ein zusammenklappbares Gehäuse bzw. ist in ein zusammenklappbares Gehäuse integrierbar.

Es ist vorgesehen, dass das Display der Darstellungseinheit Teil eines ersten Gehäuseteils ist und dass die optische Komponente Teil eines zweiten Gehäuseteils ist, wobei das erste und das zweite Gehäuseteil zueinander verschwenkbar gelagert sind. Vorzugsweise sind das erste Gehäuseteil und das zweite Gehäuseteil hierzu mit einem Scharnier verbunden, das einen Endanschlag aufweist, wobei das Scharnier in vorgebbaren Winkelpositionen arretierbar ist. Mit anderen Worten, der Klappmechanismus der optisch umlenkenden Komponente kann direkt von der Stirnfläche des Systems durch ein Scharnier erfolgen, welches wahlweise rastend arbeitet, oder bezogen auf das Gewicht der optisch umlenkenden Komponente vorgespannt ist. Dabei sind zum Zusammenklappen des ersten und des zweiten Gehäuseteils vorzugsweise mindestens eine Gasdruckfeder, ein Scharnierhubmechanismus, ein Kniehebelmechanismus oder eine Z-Faltung angeordnet, wobei das Zusammen- oder Aufklappen wahlweise manuell oder mittels automatischer Aktuatoren erfolgen kann.

Nach einer weiteren bevorzugten Ausgestaltung der Erfindung ist vorgesehen, dass in dem ersten Gehäuseteil eine Recheneinheit und ein Akkumulator integriert ist. Alternativ kann die Recheneinheit als statischer Teil auf einem Tisch liegend genutzt und nur das Display mit der optisch umlenkenden Komponente verschwenkt werden. Bei dieser Ausgestaltung bilden die Recheneinheit und das Display jedoch keine gemeinsame Einheit und sind nicht innerhalb eines gemeinsamen (ersten) Gehäuseteils integriert.

Im aufgeklappten und einsatzbereiten Zustand ist das Innere des tragbaren Endgerätes von allen Seiten von störendem Fremdlicht geschützt. Neben dem ersten und dem zweiten Gehäuseteil ist erfindungsgemäß ein drittes Gehäuseteil vorgesehen, das derart schwenkbar mit dem ersten oder dem zweiten Gehäuseteil verbunden ist, das es im zusammengeklappten Zustand das zweite Gehäuseteil und die optische Komponente als Schutzabdeckung abdeckt und im aufgeklappten Zustand derart mit dem ersten oder den zweiten Gehäuseteil lösbar verbunden ist, dass sich zwischen dem ersten Gehäuseteil, dem zweiten Gehäuseteil und dem dritten Gehäuseteil ein Raum mit einem dreieckförmigen Querschnitt ergibt. Der Raum ist geometrisch mithin als Prisma oder Zylinder mit einer dreieckigen Grundfläche bzw. einer dreieckigen erzeugenden Kurve ausgestaltet. Die dreieckförmigen Stirnflächen des Raums sind vorzugsweise mit Seitenflächenteilen lichtundurchlässig verschließbar, die vorteilhafterweise flexibel ausgestaltet sind, was ein einfaches Aufklappen des Endgerätes begünstigt. Die Seitenflächenteile sind vorzugsweise mit dem dritten Gehäuseteil lösbar verbindbar, wobei zur lösbaren Verbindung vorzugsweise eine Magnetverbindung vorgesehen ist. Mit anderen Worten, es sind faltbare Seitenflächenteile vorgesehen, die wahlweise einseitig fest montiert sind und auf der anderen Seite z.B. mittels Magneten an den gegenüberliegenden Gehäuseteilen halten. Eine alternative Ausführungsform ist dahingehend vorgesehen, dass die faltbaren Seitenflächen beidseitig fest montiert sind - also auf Seiten des ersten und zweiten Gehäuseteils - und über den Klappmechanismus beim Zusammenklappen eigenständig nach innen einfalten. Gemäß einer dritten Ausführungsform ist vorgesehen, dass die Seitenflächenteile nicht starr sondern flexibel über einen Aufrollmechanismus ein- und aufrollbar sind. Der Rollmechanismus ist in diesem Fall lediglich an einem der Gehäuseteile verbunden und das ausgerollte Seitenflächenteil lässt an den jeweils anderen Gehäuseteilen lösbar befestigen.

Um einen stabilen Stand des tragbaren Endgerätes im ausgeklappten Zustand zu gewährleisten ist nach einer bevorzugten Ausgestaltung der Erfindung vorgesehen, dass das erste Gehäuseteil mit einem ein- und ausklappbaren Ständer verbunden ist, so dass das Gehäuse im aufgeklappten Zustand auf Standflächen ruht, die von dem Ständer und dem ersten Gehäuseteil gebildet werden. Vorzugsweise ist zwischen dem ersten Gehäuseteil und dem Ständer ein Scharnier mit einem Endanschlag vorgesehen, so dass das System automatisch in eine für den Betrachter richtige Position gebracht wird. Im ausgeklappten Zustand des Gehäuses ist dabei der Winkel zwischen dem Ständer und dem ersten Gehäuseteil durch eine Arretierung festlegbar.

Eine konkrete Ausführungsform der vorliegenden Erfindung wird nachfolgend mit Bezug auf die Figuren erläutert. Es zeigen:
- Fig. 1: ein tragbares Endgerät im ausgeklappten Zustand und
- Fig. 2: ein tragbares Endgerät im zusammengekappten Zustand.

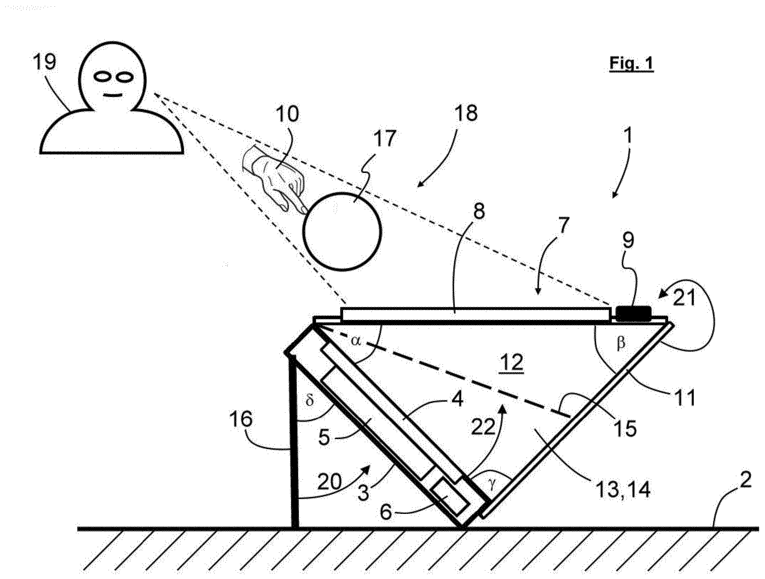

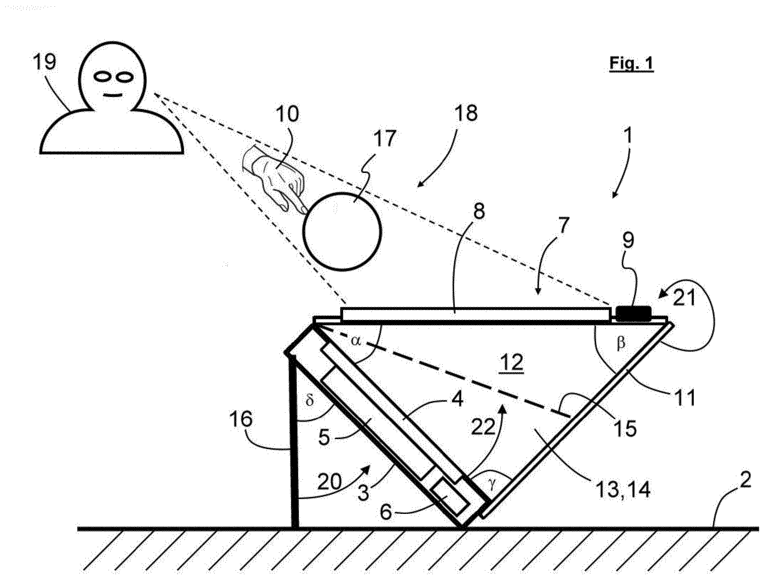

Ein erfindungsgemäßes tragbares Endgerät 1 ist im aufgeklappten Zustand in Fig. 1 dargestellt. Das Endgerät 1 steht dabei auf einer stabilen Oberfläche 2, wie beispielsweise einem Tisch oder dem Boden, und besitzt ein erstes Gehäuseteil 3, das ein Display 4 einer Darstellungseinheit, eine Recheneinheit 5 und einen Akkumulator 6 enthält. Das erste Gehäuseteil 3 ist über ein (nicht dargestelltes) Scharnier mit einem zweiten Gehäuseteil 7 verbunden, das eine optische Komponente 8, insbesondere in Form einer Mehrspiegelplatte oder eines Linsensystems, und einen ersten Sensor 9 zur Erkennung und Verfolgung eines Bedienelementes 10 aufweist. Das Display 4 und die optische Komponente 8 bilden in Kombination die Darstellungseinheit.

Das tragbare Endgerät 1 weist ein drittes Gehäuseteil 11 auf, das schwenkbar mit dem ersten oder dem zweiten Gehäuseteil 3, 7 verbunden ist und im aufgeklappten Zustand eine Seitenwandung bildet. Am freien Ende des dritten Gehäuseteils 11 ist es lösbar mit dem zweiten oder dem ersten Gehäuseteil 3, 7 verbunden, je nach dem, an welchem der Gehäuseteile 3, 7 das dritte Gehäuseteil 11 schwenkbeweglich gelagert ist. Im dargestellten Ausführungsbeispiel ist das dritte Gehäuseteil 11 am zweiten Gehäuseteil 7 über ein nicht gezeigtes Scharnier angelenkt und im aufgeklappten Zustand lösbar mit dem ersten Gehäuseteil 3 verbunden.

Die Gehäuseteile 3, 7, 11 bilden im aufgeklappten Zustand des tragbaren Endgerätes 1 die Seitenwandungen eines Raums 12, der sich in die Zeichnungsebene hinein erstreckt und parallel hierzu dreieckförmige Stirnflächen 13 aufweist. Diese Stirnflächen 13 sind im aufgeklappten Zustand des Endgerätes 1 durch lichtundurchlässige Seitenflächenteile 14 verschlossen. Hierzu können die Seitenflächenteile 14 als zusätzliche Teile lösbar mit allen Gehäuseteilen 3, 7, 11 verbunden werden. Alternativ können die Seitenflächenteile 14 beispielsweise an dem ersten und dem zweiten Gehäuseteil 3, 7 befestigt sein, so dass sich ca. entlang der Winkelhalbierenden eine Knickfalz 15 ergibt. Beim Aufklappen des ersten und zweiten Gehäuseteils 3, 7 spannen sich die Seitenflächenteile 14 automatisch auf und lassen sich am dritten Gehäuseteil 11 - beispielsweise mittels Magnete - lösbar befestigen.

Zum kippsicheren Aufstellen des tragbaren Endgerätes 1 ist an dem ersten Gehäuseteil 3 ein Ständer 16 befestigt, der mittels eines vorzugsweise einrastbaren Scharniers (nicht gezeigt) aufgeklappt werden kann, so dass sich zwischen Ständer 16 und erstem Gehäuseteil 3 ein Winkel δ von ca. 45° ± 20° ergibt.

Das tragbare Endgerät 1 ist im aufgestellten Zustand eingerichtet, um ein virtuelles Abbild 17 innerhalb eines Interaktionsraums 18 darzustellen, mit dem ein Anwender 19 über ein geeignetes Bedienelement 10, im dargestellten Ausführungsbeispiel eine Hand, interagieren kann. Hierzu wird auf dem Display 4 der Darstellungseinheit innerhalb des ersten Gehäuseteils 3 eine Abbildung erzeugt, die über die optische Komponente 8 in den Interaktionsraum 18 projiziert wird. Dort nimmt der Anwender 19 das virtuelle Abbild 17 schwebend war und kann hiermit unmittelbar interagieren. Zur Interaktion und mithin zur Eingabe von Befehlen ist am tragbaren Endgerät 1 der erste Sensor 9 vorgesehen, der die Position und die Bewegung des Bedienelementes 10 erkennt.

Für eine optimale Darstellung des virtuellen Abbilds 17 ist zwischen dem ersten Gehäuseteil 3 und dem zweiten Gehäuseteil 7 ein Winkel α von 45° ± 20° vorgesehen.

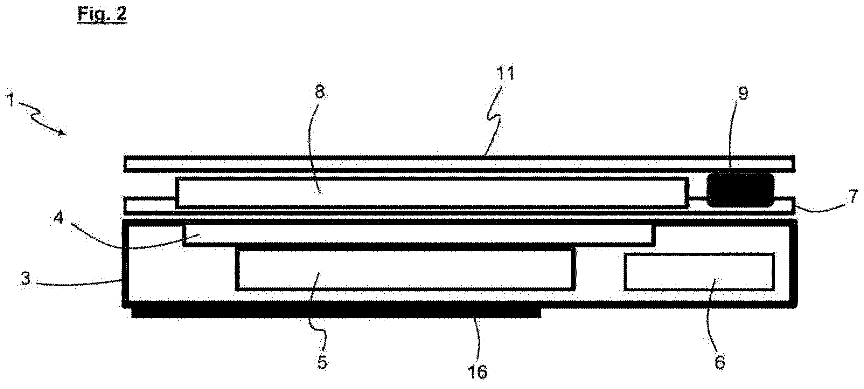

Zum Zusammenklappen wird das tragbare Endgerät 1 zunächst angehoben, so dass der Ständer 16 in Pfeilrichtung 20 verschwenkt werden kann, bis es an dem ersten Gehäuseteil 3 anliegt. Anschließend wird das dritte Gehäuseteil 11 in Pfeilrichtung 21 verschwenkt und auf das zweite Gehäuseteil 7 sowie die darin befindliche optische Komponente 8 gelegt, so dass es als Schutzabdeckung einsetzbar ist. Schließlich wird das zweite Gehäuseteil 7 auf das erste Gehäuseteil 3 in Pfeilrichtung 22 geschwenkt und dort ggf. lösbar fixiert, so dass sich insgesamt ein quaderförmiges tragbares Endgerät 1 ergibt, wie es im zusammengeklappten Zustand in Fig. 2 dargestellt ist.

### Bezugszeichenliste

- 1: Endgerät
- 2: Oberfläche
- 3: erstes Gehäuseteil
- 4: Display
- 5: Recheneinheit
- 6: Akkumulator
- 7: zweites Gehäuseteil
- 8: optische Komponente
- 9: erster Sensor
- 10: Bedienelement
- 11: drittes Gehäuseteil
- 12: Raum
- 13: Stirnfläche
- 14: Seitenflächenteil
- 15: Knickfalz
- 16: Ständer
- 17: virtuelles Abbild
- 18: Interaktionsraum
- 19: Anwender
- 20: Pfeilrichtung
- 21: Pfeilrichtung
- 22: Pfeilrichtung

## Patentansprüche

1. Tragbares Endgerät mit einer Darstellungseinheit, einer Bedieneinheit und einem zusammenklappbaren Gehäuse, wobei die Darstellungseinheit eingerichtet ist, um innerhalb eines Interaktionsraums (18) ein virtuelles zweidimensionales oder dreidimensionales Abbild (17) zu erzeugen, so dass die Darstellung des virtuellen Abbilds (17) räumlich mit dem Interaktionsraum (18) zusammenfällt, und die Bedieneinheit, eine Interaktion mit dem im Interaktionsraum (18) stehenden Abbild (17) erlaubt, wozu die Bedieneinheit einen ersten Sensor (9) aufweist, der zur Objekterkennung eingerichtet ist und eine Interaktion mit dem Abbild (17) innerhalb des Interaktionsraums (18) erlaubt, wobei die Darstellungseinheit ein Display (4) und eine transmissive optische Komponente (8) aufweist, wobei das Display (4) als 2D- oder autostereoskopisches 3D-Display und die transmissive optische Komponente (8) als Reflektorsystem oder als Linsensystem ausgebildet ist, wobei das Display (4) der Darstellungseinheit Teil eines ersten Gehäuseteils (3) ist und die optische Komponente Teil (8) eines zweiten Gehäuseteils (7) ist, wobei das erste und das zweite Gehäuseteil (3, 7) zueinander verschwenkbar gelagert sind, **gekennzeichnet durch** ein drittes Gehäuseteil (11), das derart schwenkbar mit dem zweiten Gehäuseteil (7) verbunden ist, dass es im zusammengeklappten Zustand das zweite Gehäuseteil (7) und die optische Komponente (8) als Schutzabdeckung abdeckt und im aufgeklappten Zustand derart mit dem ersten Gehäuseteil (3) lösbar verbunden ist, dass sich zwischen dem ersten Gehäuseteil (3), dem zweiten Gehäuseteil (7) und dem dritten Gehäuseteil (11) ein Raum (12) mit einem dreieckförmigen Querschnitt und dreieckförmigen Stirnflächen (13) ergibt.

2. Tragbares Endgerät nach Anspruch 1, **dadurch gekennzeichnet, dass** das Reflektorsystem als Mehrspiegelplatte ausgebildet ist.

3. Tragbares Endgerät nach einem der Ansprüche 1 bis 2, **dadurch gekennzeichnet, dass** die Darstellungseinheit mit einem geeignet eingerichteten zweiten Sensor verbunden ist, der eine Positionsbestimmung und/oder Bewegungsbestimmung des Kopfes eines Anwenders (19) erlaubt, so dass das stehende Abbild (17) an die Position und/oder Bewegung des Kopfes automatisch anpassbar ist.

4. Tragbares Endgerät nach einem der Ansprüche 1 bis 3, **gekennzeichnet durch** eine Vorrichtung zur Erzeugung eines haptischen Feedbacks während der Interaktion mit dem Abbild (17).

5. Tragbares Endgerät nach Anspruch 1, **dadurch gekennzeichnet, dass** das erste Gehäuseteil (3) und das zweite Gehäuseteil (7) mit einem Scharnier verbunden sind, das einen Endanschlag aufweist, wobei das Scharnier in vorgebbaren Winkelpositionen arretierbar ist.

6. Tragbares Endgerät nach einem der Ansprüche 1 oder 5, **dadurch gekennzeichnet, dass** zum Zusammenklappen des ersten und des zweiten Gehäuseteils (3, 7) mindestens eine Gasdruckfeder, ein Scharnierhubmechanismus, ein Kniehebelmechanismus oder eine Z-Faltung angeordnet ist, wobei das Klappen manuell oder mittels Aktuatoren automatisch erfolgt.

7. Tragbares Endgerät nach einem der Ansprüche 4 bis 6, **dadurch gekennzeichnet, dass** in dem ersten Gehäuseteil (3) eine Recheneinheit (5) und ein Akkumulator (6) integriert ist.

8. Tragbares Endgerät nach Anspruch 1, **dadurch gekennzeichnet, dass** die dreieckförmigen Stirnflächen (13) des Raums (12) mit Seitenflächenteilen (14) verschließbar sind, die vorzugsweise flexibel ausgestaltet sind.

9. Tragbares Endgerät nach Anspruch 8, **dadurch gekennzeichnet, dass** die Seitenflächenteile (14) lösbar mit dem dritten Gehäuseteil (11) verbindbar sind, wobei zur lösbaren Verbindung vorzugsweise eine Magnetverbindungen vorgesehen ist.

10. Tragbares Endgerät nach einem der Ansprüche 1, 5 bis 9, **dadurch gekennzeichnet, dass** das zweite Gehäuseteil (7) mit einem ein- und ausklappbaren Ständer (16) verbunden ist, so dass das Gehäuse im aufgeklappten Zustand auf Standflächen ruht, die von dem Ständer (16) und dem ersten Gehäuseteil (3) gebildet werden.

11. Tragbares Endgerät nach Anspruch 10, **dadurch gekennzeichnet, dass** im ausgeklappten Zustand des Gehäuses der Winkel zwischen dem Ständer (16) und dem ersten Gehäuseteil (3) durch eine Arretierung festlegbar ist.

## Claims

1. Portable terminal with a presentation unit, an operating unit and a collapsible housing, the presentation unit being designed to generate a virtual two-dimensional or three-dimensional image (17) within an interaction space (18), so that the presentation of the virtual image (17) spatially coincides with the interaction space (18), and the operating unit allows interaction with the image (17) that is in the interaction space (18), for which purpose the operating unit has a first sensor (9), which is designed for object detection and allows interaction with the image (17) that is within the interaction space (18), the presentation unit having a display (4) and a transmissive optical component (8), the display (4) being formed as a 2D or autostereoscopic 3D display and the transmissive optical component (8) being formed as a reflector system or as a lens system, the display (4) of the presentation unit being part of a first housing part (3) and the optical component being part (8) of a second housing part (7), the first and second housing parts (3, 7) being mounted pivotably in relation to one another, **characterized by** a third housing part (11), which is pivotably connected to the second housing part (7) in such a way that in the swungtogether state it covers the second housing part (7) and the optical component (8) as a protective covering and in the swung-open state it is releasably connected to the first housing part (3) in such a way that a space (12) with a triangular cross section and triangular end faces (13) is obtained between the first housing part (3), the second housing part (7) and the third housing part (11).

2. Portable terminal according to Claim 1, **characterized in that** the reflector system is formed as a multimirror plate.

3. Portable terminal according to one of Claims 1 or 2, **characterized in that** the presentation unit is connected to a suitably designed second sensor, which allows a determination of the position and/or determination of the movement of the head of a user (19), so that the standing image (17) is automatically adaptable to the position and/or movement of the head.

4. Portable terminal according to one of Claims 1 to 3, **characterized by** a device for generating haptic feedback during the interaction with the image (17).

5. Portable terminal according to Claim 1, **characterized in that** the first housing part (3) and the second housing part (7) are connected by a hinge, which has an end stop, the hinge being arrestable in predeterminable angular positions.

6. Portable terminal according to one of Claims 1 or 5, **characterized in that** at least one gas spring, a hinge lifting mechanism, a toggle lever mechanism or a Z folding is arranged for the swinging together of the first and second housing parts (3, 7), the swinging taking place manually or automatically by means of actuators.

7. Portable terminal according to one of Claims 4 to 6, **characterized in that** a computing unit (5) and a storage battery (6) are integrated in the first housing part (3).

8. Portable terminal according to Claim 1, **characterized in that** the triangular end faces (13) of the space (12) can be closed by side-face parts (14), which are preferably flexibly designed.

9. Portable terminal according to Claim 8, **characterized in that** the side-face parts (14) can be releasably connected to the third housing part (11), a magnetic connection preferably being provided for the releasable connection.

10. Portable terminal according to one of Claims 1, 5 to 9, **characterized in that** the second housing part (7) is connected to a stand (16) which can be swung in and out, so that the housing in the swung-open state rests on standing areas that are formed by the stand (16) and the first housing part (3).

11. Portable terminal according to Claim 10, **characterized in that**, in the swung-open state of the housing, the angle between the stand (16) and the first housing part (3) can be fixed by an arresting means.

## Revendications

1. Terminal portable, comprenant une unité de représentation, une unité de commande et un boîtier pliable, dans lequel l'unité de représentation est conçue pour générer à l'intérieur d'un espace d'interaction (18) une image virtuelle (17) en deux ou trois dimensions de sorte que la représentation de l'image virtuelle (17) coïncide physiquement avec l'espace d'interaction (18), et l'unité de commande permet une interaction avec l'image (17) se trouvant dans l'espace d'interaction (18), l'unité de commande présentant un premier capteur (9) à cet effet qui est conçu pour l'identification d'objets et permet une interaction avec l'image (17) à l'intérieur de l'espace d'interaction (18), dans lequel l'unité de représentation présente un affichage (4) et un composant optique à transmission (8), dans lequel l'affichage (4) est réalisé sous la forme d'un affichage 2D ou 3D autostéréoscopique, et le composant optique à transmission (8) est réalisé sous la forme d'un système de réflecteurs ou d'un système de lentilles, dans lequel l'affichage (4) de l'unité de représentation fait partie d'une première partie de boîtier (3), et le composant optique (8) fait partie d'une deuxième partie de boîtier (7), dans lequel la première et la deuxième partie de boîtier (3, 7) sont montées pivotantes l'une par rapport à l'autre,
**caractérisé par** une troisième partie de boîtier (11) qui est reliée en pivotement à la deuxième partie de boîtier (7) de telle sorte qu'à l'état plié, elle couvre la deuxième partie de boîtier (7) et le composant optique (8) comme un capot de protection, et à l'état déplié, elle est reliée de manière amovible à la première partie de boîtier (3) de telle sorte qu'il en résulte entre la première partie de boîtier (3), la deuxième partie de boîtier (7) et la troisième partie de boîtier (11) un espace (12) ayant une section transversale triangulaire et des surfaces frontales triangulaires (13).

2. Terminal portable selon la revendication 1, **caractérisé en ce que** le système de réflecteurs est réalisé sous la forme d'un panneau à plusieurs miroirs.

3. Terminal portable selon l'une quelconque des revendications 1 à 2, **caractérisé en ce que** l'unité de représentation est reliée à un deuxième capteur conçu de manière adéquate, qui permet une détermination de position et/ou une détermination de mouvement de la tête d'un utilisateur (19) de sorte que l'image fixe (17) peut être adaptée automatiquement à la position et/ou au mouvement de la tête.

4. Terminal portable selon l'une quelconque des revendications 1 à 3, **caractérisé par** un dispositif permettant de générer un retour haptique pendant l'interaction avec l'image (17).

5. Terminal portable selon la revendication 1, **caractérisé en ce que** la première partie de boîtier (3) et la deuxième partie de boîtier (7) sont reliées par une charnière qui présente une butée d'extrémité, la charnière pouvant être arrêtée dans des positions angulaires prédéfinissables.

6. Terminal portable selon l'une quelconque des revendications 1 ou 5, **caractérisé en ce qu'**au moins un ressort à gaz, un mécanisme de levage à charnière, un mécanisme à genouillère ou un pliage accordéon est disposé pour plier la première et la deuxième partie de boîtier (3, 7), le repliage étant effectué manuellement ou automatiquement au moyen d'actionneurs.

7. Terminal portable selon l'une quelconque des revendications 4 à 6, **caractérisé en ce qu'**une unité de calcul (5) et un accumulateur (6) sont intégrés dans la première partie de boîtier (3).

8. Terminal portable selon la revendication 1, **caractérisé en ce que** les surfaces frontales triangulaires (13) de l'espace (12) peuvent être fermées par des parties de surface latérale (14) qui sont de préférence configurées de manière flexible.

9. Terminal portable selon la revendication 8, **caractérisé en ce que** les parties de surface latérale (14) peuvent être reliées de manière amovible à la troisième partie de boîtier (11), dans lequel de préférence une liaison magnétique est prévue pour une liaison amovible.

10. Terminal portable selon l'une quelconque des revendications 1, 5 à 9, **caractérisé en ce que** la deuxième partie de boîtier (7) est reliée à un support (16) pouvant être plié et déplié de sorte qu'à l'état déplié, le boîtier repose sur des surfaces de pose qui sont formées par le support (16) et la première partie de boîtier (3).

11. Terminal portable selon la revendication 10, **caractérisé en ce qu'**à l'état déplié du boîtier, l'angle entre le support (16) et la première partie de boîtier (3) peut être fixé par un dispositif d'arrêt.
